# EUROPÄISCHE PATENTSCHRIFT

(11) **EP 3 500 514 B1**
(45) Veröffentlichungstag und Bekanntmachung des Hinweises auf die Patenterteilung: **09.12.2020**
(21) Anmeldenummer: 17764312.9
(22) Anmeldetag: 24.07.2017
(51) Int. Cl.: B66F 9/075, B66F 9/10

(54) **FAHRZEUG MIT SEITLICHER HUBEINRICHTUNG**
VEHICLE HAVING A LATERAL LIFTING DEVICE
ENGIN POURVU D'UN SYSTÈME DE LEVAGE LATÉRAL

(30) Priorität: 26.07.2016 AT 506782016
(43) Veröffentlichungstag der Anmeldung: 26.06.2019
(73) Patentinhaber: BULMOR Holding GmbH, 1110 Wien (AT)
(72) Erfinder: SCHÜTZENEDER, Herbert, 4322 Windhaag bei Perg (AT)
(74) Vertreter: Burger, Hannes
(86) Internationale Anmeldenummer: PCT/AT2017/060187
(87) Internationale Veröffentlichungsnummer: WO 2018/018057

(56) Entgegenhaltungen:
- WO-A1-00/76902
- DE-U1- 9 205 020
- FR-A1- 2 117 806
- US-A- 5 265 021

## Beschreibung

Die Erfindung betrifft ein Fahrzeug mit seitlicher Hubeinrichtung, insbesondere Seitenstapler.

Aus der WO 01/12493 A1 und der WO 03/059799 A1 sind Stapler bekannt, welche in mehrere Richtungen bewegt werden können.

Die aus der WO 01/12493 A1 und der WO 03/059799 A1 bekannten Stapler weisen den Nachteil auf, dass sie nicht oder nur beschränkt geländegängig sind und daher abseits von ebenen und befestigten Flächen, wie etwa in Hallen, nur bedingt eingesetzt werden können.

Aus der FR 2 117 806 A1 ist ein Fahrzeug gemäß dem Oberbegriff des Anspruchs 1 bekannt.

Aufgabe der vorliegenden Erfindung war es, ein Fahrzeug zu schaffen, welcher auch auf nicht befestigten Flächen eingesetzt werden kann.

Diese Aufgabe wird durch ein Fahrzeug gemäß den Ansprüchen gelöst.

Das Fahrzeug ist mit seitlicher Hubeinrichtung, insbesondere ein Seitenstapler ausgebildet. Das Fahrzeug umfasst zumindest einen ersten Achsträger und einen zweiten Achsträger, wobei die beiden Achsträger mittels einer seitlich außermittig angeordneten Verbindungskonstruktion miteinander gekoppelt sind und wobei die Hubeinrichtung in einem Freiraum zwischen den beiden Achsträgern angeordnet ist, wobei die Verbindungskonstruktion am seitlichen Rand der Achsträger angeordnet ist, sodass das Fahrzeug in Draufsicht U-Förmig ausgebildet ist und wobei die beiden parallel zueinander liegenden Schenkel des U-Förmig ausgebildeten Fahrzeuges durch die Achsträger gebildet sind und der Freiraum zur Aufnahme der Hubeinrichtung an der offenen Seite der U-Förmigen Anordnung ausgebildet ist, wobei der erste Achsträger ein erstes Radpaar und der zweite Achsträger ein zweites Radpaar aufweist. Jedes der einzelnen Räder der Radpaare ist um eine vertikal ausgerichtete Drehachse drehbar gelagert. Das Fahrzeug ist in einer ersten Fahrtrichtung parallel zu einer Längsachse des Fahrzeuges bewegbar und in einer zweiten Fahrtrichtung quer zur Längsachse des Fahrzeuges bewegbar.

Von Vorteil an der erfindungsgemäßen Ausbildung des Fahrzeuges ist, dass durch die Ausbildung von Radpaaren an den einzelnen Achsträgern die Kippstabilität des Fahrzeuges erhöht wird. Gleichzeitig wird durch die drehbare Lagerung der einzelnen Räder der Radpaare um eine vertikal ausgerichtete Drehachse eine möglichst hohe Wendigkeit und Flexibilität des Fahrzeuges erreicht.

Am ersten Achsträger ist eine erste Achse ausgebildet, welche zur Aufnahme des ersten Radpaares dient und am zweiten Achsträger eine zweite Achse ausgebildet, welche zur Aufnahme des zweiten Radpaares dient. Von Vorteil ist hierbei, dass durch Ausbildung einer Achse an welcher die einzelnen Räder der Radpaare ausgebildet sind, eine erhöhte Stabilität bzw. Festigkeit der Radaufnahme erreicht werden kann. Darüber hinaus ist eine Achse einfach in den Achsträger einzubauen und kann auch zu Wartungszwecken einfach herausgenommen bzw. ausgetauscht werden.

Ferner kann vorgesehen sein, dass jedes der einzelnen Räder an einer Radhalterung aufgenommen ist, welche Radhalterung eine Radiallagerung mit horizontal ausgerichteter Drehachse zur drehbaren Aufnahme eines Rades aufweist und eine Axiallagerung mit vertikal ausgerichteter Drehachse aufweist mittels welcher die Radhalterung frei um die vertikal ausgerichtete Drehachse drehbar an den Achsträgern gelagert sind. Von Vorteil ist hierbei, dass eine derartige Radhalterung für jedes der einzelnen Räder gleich ausgebildet sein kann und somit die Komplexität in der Fertigung des Fahrzeuges vermindert werden kann, wodurch die Qualität des Fahrzeuges verbessert werden kann.

Darüber hinaus kann vorgesehen sein, dass die Achsen jeweils in etwa mittig der Achsträger bezüglich eines horizontalen Drehpunktes pendelnd gelagert aufgenommen sind. Von Vorteil ist hierbei, dass durch die pendelnd aufgenommenen Achsen Unebenheiten im Untergrund ausgeglichen werden können. Darüber hinaus kann durch die pendelnd gelagerten Achsen ein Neigungswinkel der Achsträger relativ zum Untergrund aktiv eingestellt werden.

Alternativ dazu kann vorgesehen sein, dass die Achsen jeweils außermittig der Achsträger bezüglich eines horizontalen Drehpunktes pendelnd gelagert aufgenommen sind. Von Vorteil ist hierbei, dass durch diese Maßnahme trotz Verstellung des Neigungswinkels erreicht werden kann, dass beispielsweise der Abstand der Aufnahmegabel zum Boden bei der Verstellung des Neigungswinkels nicht ungewollt verstellt wird. Dies kann dadurch erreicht werden, dass der Drehpunkt möglichst nahe im Bereich der Staplergabel angeordnet ist.

Gemäß einer Weiterbildung ist es möglich, dass die Achsen mittels zumindest einem zum horizontalen Drehpunkt beabstandet angeordneten Stellmittel mit dem jeweiligen Achsträger gekoppelt sind. Von Vorteil ist hierbei, dass durch das Stellmittel die Neigung des Achsträgers relativ zur Achse aktiv eingestellt werden kann. Je weiter das Stellmittel vom Drehpunkt beabstandet ist, desto geringer ist die auf das Stellmittel wirkende Kraft, wobei ebenfalls mit zunehmender Beabstandung des Stellmittels vom Drehpunkt der notwendige Stellweg erhöht wird. Das Stellmittel kann beispielsweise in Form eines Hydraulikzylinders ausgebildet sein. Weiters ist es auch denkbar, dass das Stellmittel beispielsweise in Form eines Elektromotors mit Stellspindel ausgebildet ist.

Ferner kann es zweckmäßig sein, wenn die einzelnen Räder mittels der an der Radhalterung ausgebildeten Axiallagerung mit vertikal ausgerichteter Drehachse frei drehbar an den Achsen der Achsträger aufgenommen sind. Von Vorteil ist hierbei, dass durch die an den Achsen aufgenommene Radhalterung erreicht werden kann, dass die vertikal ausgerichtete Drehachse der Radhalterung in möglichst vielen Einsatzfällen im rechten Winkel zum Untergrund ausgerichtet ist.

Darüber hinaus kann vorgesehen sein, dass die Achsenjeweils mittels zumindest zweier zueinander beabstandeter Stellmittel mit dem jeweiligen Achsträger gekoppelt sind und durch Verstellung der Stellmittel die Achse bezüglich dem Achsträger um einen virtuellen horizontalen Drehpunkt verschwenkbar ist. Von Vorteil ist hierbei, dass die Achsen nicht an einem festen Drehpunkt zu den Achsträgern gelagert sind, sondern dass der Drehpunkt durch die beiden Stellmittel sowohl in der Höhe als auch in der Breite frei verschoben werden kann und somit die Flexibilität des Fahrzeuges erhöht werden kann.

Erfindungsgemäß ist ein Drehmotor ausgebildet, an welchem ein Ritzel angeordnet ist und mittels einer mechanischen Kopplung, vorzugsweise einem umlaufenden Zugmittel, mit einem an jeder Radhalterung ausgebildeten Zahnrad gekoppelt ist. Von Vorteil ist hierbei, dass durch eine derartige Ausbildung eines Drehmotors zur Winkelverstellung der Radhalterung erreicht werden kann, dass die Radhalterung theoretisch um 360° frei verdrehbar am Achsträger bzw. an der Achse aufgenommen ist. Alternativ zu einem umlaufenden Zugmittel kann die mechanische Kopplung beispielsweise durch ein Zahnrad realisiert werden.

Gemäß einer besonderen Ausprägung ist es möglich, dass das Zugmittel in Form einer Antriebskette ausgebildet ist. Von Vorteil ist hierbei, dass eine derartige Antriebskette robust und unempfindlich gegen Schmutz ist. Darüber hinaus relativ hohe Kräfte aufnehmen kann. In einer Alternativvariante kann auch vorgesehen sein, dass das Zugmittel beispielsweise durch einen Zahnriemen gebildet ist.

Entsprechend einer vorteilhaften Weiterbildung kann vorgesehen sein, dass der Drehmotor als Hydraulikmotor ausgebildet ist. Ein derartiger Hydraulikmotor kann bei möglichst kleiner Bauweise eine möglichst große Kraft auf das Zugmittel aufbrigen.

In einer alternativen Ausführungsvariante kann vorgesehen sein, dass ein Hydraulikzylinder ausgebildet ist, mittels welchem die Radhalterung um die vertikal ausgerichtete Drehachse verdrehbar ist. Ein Hydraulikzylinder kann platzsparend im Fahrzeug verbaut werden und darüber hinaus einfach angesteuert werden.

Insbesondere kann es vorteilhaft sein, wenn jedes der einzelnen Räder des Fahrzeuges jeweils mit einem Antriebsmotor zum Antrieb der Räder gekoppelt ist. Von Vorteil ist hierbei, dass durch diese Maßnahme die Geländegängigkeit des Fahrzeuges verbessert werden kann. Darüber hinaus können die einzelnen Antriebsmotoren entsprechend dem aktuell vorliegenden Einschlagwinkel eine unterschiedliche Antriebsgeschwindigkeit aufweisen, wodurch Verspannungen innerhalb des Fahrzeuges vermieden werden können. Die Antriebsmotoren können darüber hinaus an der Radhalterung aufgenommen sein und somit mitsamt der Radhalterung relativ zu den einzelnen Achsträgern verdreht werden.

Darüber hinaus kann vorgesehen sein, dass der Antriebsmotor zum Antrieb der Räder als Hydraulikmotor ausgebildet ist. Von Vorteil ist hierbei, dass ein Hydraulikmotor bei möglichst geringer Baugröße und Gewicht ein möglichst hohes Drehmoment aufbringen kann. Darüber hinaus weist ein Hydraulikmotor eine möglichst geringe Fehleranfälligkeit auf. Entsprechend einer vorteilhaften Weiterbildung kann vorgesehen sein, dass die Radhalterung in der vertikal ausgerichteten Drehachse um einen maximalen Winkel zwischen 180° und 400°, insbesondere zwischen 210° und 360°, bevorzugt zwischen 250° und 290° verdrehbar ist. Von Vorteil ist hierbei, dass bei Verdrehung der Radhalterung in einem derartigen maximalen Drehwinkelbereich erreicht werden kann, dass das Fahrzeug in alle Richtungen manövrierfähig bleibt und trotzdem die Zuleitung für die Energieversorgung des Antriebsmotors der einzelnen Räder möglichst einfach ausgebildet sein kann, da es zu keinen Mehrfachumdrehungen der Radhalterung kommt.

Weiters kann vorgesehen sein, dass zumindest zwei der Räder oder auch alle der Räder einen Durchmesser zwischen 10 Zoll und 50 Zoll (25,4 cm und 127 cm), insbesondere zwischen 12 Zoll und 50 Zoll (30,5 cm und 127 cm), bevorzugt zwischen 14 Zoll und 50 Zoll (35,6 cm und 127 cm), aufweisen. Räder mit einem Durchmesser im angegebenen Bereich lassen sich bei hoher Geländegängigkeit noch überraschend gut drehen um eine gute Manövrierfähigkeit des Fahrzeuges zu erzielen.

Ferner kann vorgesehen sein, dass eine Auflageebene ausgebildet ist, an welcher von der Hubeinrichtung aufgenommene längliche Gegenstände abgelegt werden können, wobei die Auflageebene oberhalb der Räder angeordnet ist. Von Vorteil ist hierbei, dass eine derartige Auflageebene den Transport von langem Stangenmaterial erleichtert, wobei die Bewegungsfreiheit der Räder möglichst groß ist.

Dem Fachmann ist klar, dass analog zu einer Axiallagerung mit vertikal ausgerichteter Drehachse welche in der Radhalterung ausgebildet ist, auch vorgesehen sein kann, dass die entsprechende Axiallagerung mittels welcher die Radhalterung frei um die vertikal ausgerichtete Drehachse drehbar an den Achsträgern gelagert sind, direkt an den Achsträgern oder den Achsen ausgebildet sein kann und somit die gleiche Funktion erfüllen.

Auch die Radiallagerung zur drehbaren Aufnahme eines Rades an der Radhalterung kann direkt in einem der Räder ausgebildet sein.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Fahrzeuges mit seitlicher Hubeinrichtung von schräg oben;
- Fig. 2: eine perspektivische Ansicht eines Fahrzeuges mit seitlicher Hubeinrichtung von schräg unten mit Stellung der Räder in einer ersten Stellung;
- Fig. 3: eine perspektivische Ansicht eines Fahrzeuges mit seitlicher Hubeinrichtung von schräg unten mit Stellung der Räder in einer zweiten Stellung;
- Fig. 4: eine perspektivische Ansicht einer Achse mit drehbar daran gelagerten Radhalterungen;
- Fig. 5: eine weitere perspektivische Ansicht einer Achse mit drehbar daran gelagerten Radhalterungen;
- Fig. 6: eine schematische Darstellung eines weiteren Ausführungsbeispiels des Fahrzeuges mit außermittigem Drehpunkt der Achsaufhängung;
- Fig. 7: eine schematische Darstellung eines weiteren Ausführungsbeispiels des Fahrzeuges mit zwei Stellmittel und Gleitlagerung;
- Fig. 8: eine schematische Draufsicht eines weiteren Ausführungsbeispiels des Fahrzeuges.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

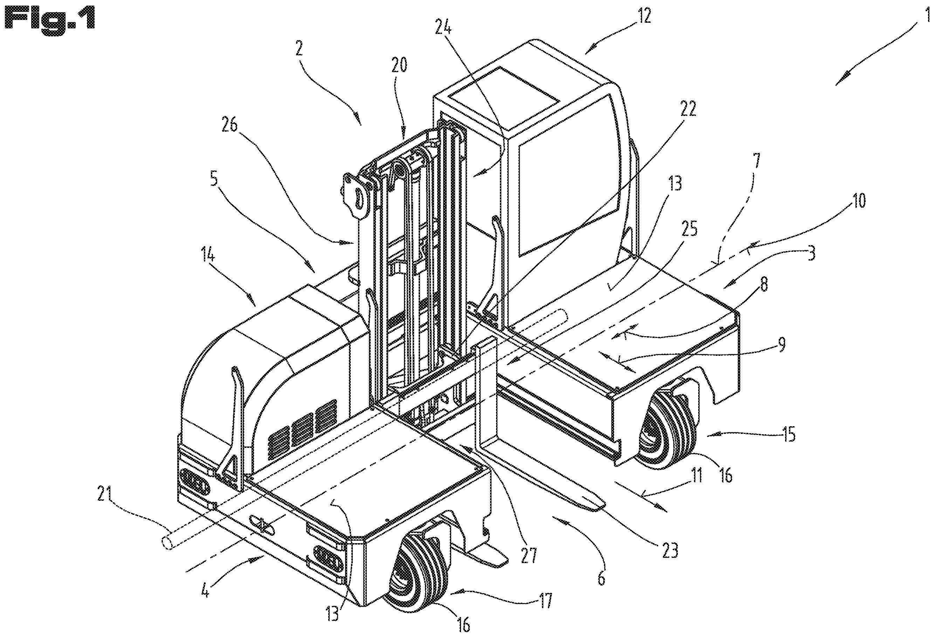

Fig. 1 zeigt eine perspektivische Ansicht von oben eines Fahrzeuges 1 mit seitlicher Hubeinrichtung 2. Ein derartiges Fahrzeug 1 wird in der Fachsprache auch als Seitenstapler bezeichnet.

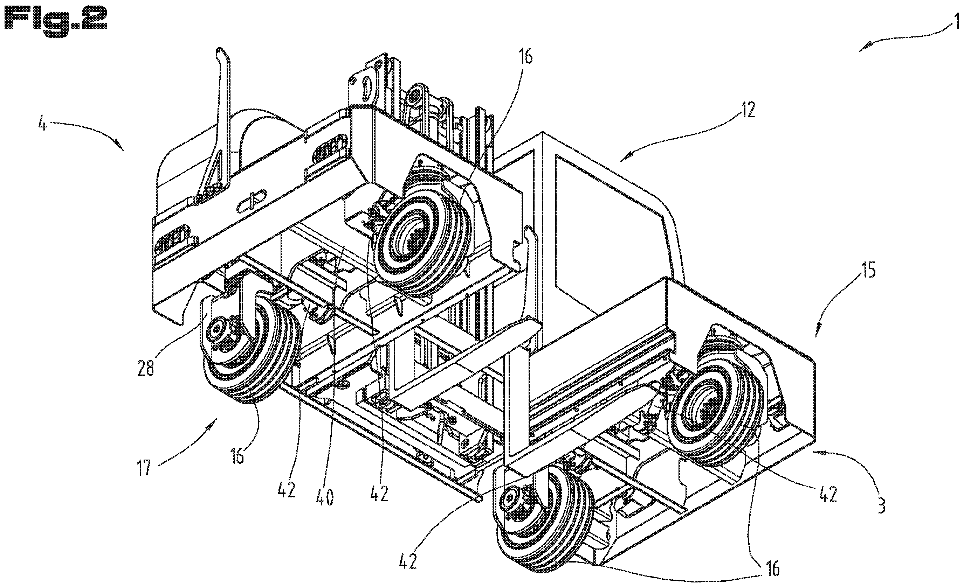

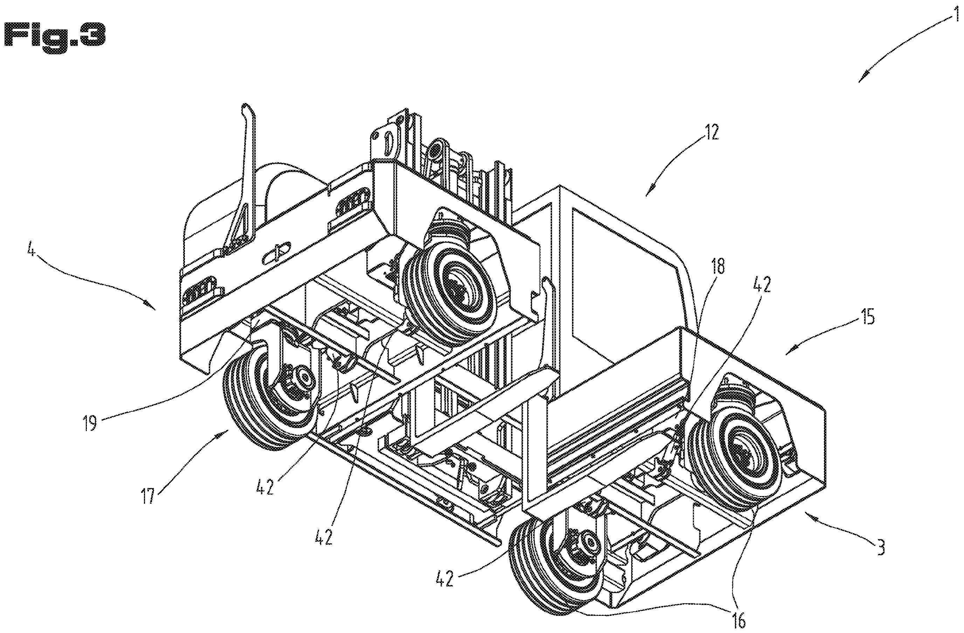

In den Figuren 2 und 3 ist das Fahrzeug 1 in weiteren perspektivischen Darstellungen von unten gezeigt, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Die folgende Beschreibung basiert auf einer Zusammenschau der verschiedenen Darstellungen des ersten Ausführungsbeispiels des Fahrzeuges 1 in den Figuren 1 bis 3, wobei nicht in jeder einzelnen der Figuren alle Bauteilnummerierungen eingetragen sind, sondern zur Übersichtlichkeit die Bauteile nur in jenen Figuren bezeichnet wurden in denen Sie besonders gut ersichtlich sind. Es wird davon ausgegangen, dass es dem Fachmann klar ist, wie verschiedene Ansichten aus verschiedenen Blickwinkeln miteinander zu kombinieren sind.

Das Fahrzeug 1 weist einen ersten Achsträger 3 und einen zweiten Achsträger 4 auf, welche durch eine Verbindungskonstruktion 5 miteinander gekoppelt sind. Insbesondere sind die beiden Achsträger 3, 4 und die Verbindungskonstruktion 5 derart miteinander gekoppelt, dass sich an einer Seite des Fahrzeuges 1 ein Freiraum 6 ergibt. In der Draufsicht gesehen, hat das Fahrzeug 1 eine U-förmige Formgebung, wobei die beiden parallelen Schenkeln des U durch den ersten Achsträger 3 und den zweiten Achsträger 4 gebildet sind.

Um den Freiraum 6 möglichst groß zu gestalten, ist die Verbindungskonstruktion 5 in Draufsicht auf das Fahrzeug 1 gesehen seitlich außermittig angeordnet. In einer bevorzugten Ausführungsvariante ist die Verbindungskonstruktion 5 möglichst weit am Rand 14 der Achsträger 3, 4 angeordnet, sodass der Freiraum 6 möglichst groß ist. Mit anderen Worten ausgedrückt ist in Draufsicht gesehen, die Verbindungskonstruktion 5 zur mittig liegenden Längsachse 7 des Fahrzeuges 1 möglichst weit beabstandet.

Ein weiterer Faktor für die Größe des Freiraumes 6 ist die Breite der Verbindungskonstruktion 5. Je schmäler die Verbindungskonstruktion 5 ausgeführt ist, desto breiter kann der Freiraum 6 sein. Die Verbindungskonstruktion 5 sollte daher bei möglichst geringen Abmaßen eine möglichst hohe Formsteifigkeit und Verwindungssteifigkeit aufweisen. Dies kann beispielsweise dadurch erreicht werden, dass die Verbindungskonstruktion 5 in Form eines Fachwerkes ausgeführt ist. Hierzu können einzelne Bleche miteinander verschweißt sein, um die Verbindungskonstruktion 5 zu formen.

In einer Alternativvariante kann auch vorgesehen sein, dass die Verbindungskonstruktion 5 in einer Profilbauweise aus verschiedenen einzelnen Blechen zusammengeschweißt ist, oder dass ein Blech zu einem Rahmenprofil gebogen ist.

Auch die Achsträger 3, 4 können als Blechkonstruktion ausgeführt sein, wobei einzelne Bleche zum jeweiligen Achsträger 3, 4 zusammengeschweißt sein können. Insbesondere kann vorgesehen sein, dass die Achsträger 3, 4 und die Verbindungskonstruktion 5 jeweils als eigene selbständige Schweißkonstruktionen vorgefertigt werden und in einem weiteren Montageschritt zusammengefügt werden.

Alternativ kann vorgesehen sein, dass die Achsträger 3, 4 und die Verbindungskonstruktion 5 aus durchgehenden Blechen geformt sind.

Als Längsrichtung 8 des Fahrzeuges 1 wird jene Richtung definiert, welche parallel zur Längsachse 7 des Fahrzeuges 1 liegt. In der Draufsicht gesehen, ist im Winkel von 90° zur Längsrichtung 8 des Fahrzeuges 1 die Querrichtung 9 des Fahrzeuges 1 ausgebildet.

Vorzugsweise kann vorgesehen sein, dass das Fahrzeug 1 in eine erste Fahrtrichtung 10 bewegt werden kann, welche in Längsrichtung 8 des Fahrzeuges 1 ausgerichtet ist. Darüber hinaus kann vorgesehen sein, dass das Fahrzeug 1 in eine zweite Fahrtrichtung 11 bewegt werden kann, welche in Querrichtung 9 des Fahrzeuges 1 ausgerichtet ist. Natürlich kann vorgesehen sein, dass das Fahrzeug 1, sowohl bei Bewegung in erster Fahrtrichtung 10 als auch bei Bewegung in zweiter Fahrtrichtung 11 gelenkt werden kann und daher von einer Geradeausfahrt in einer dieser Fahrtrichtungen 10, 11 in eine Kurvenfahrt übergehen kann.

Natürlich kann vorgesehen sein, dass das Fahrzeug 1 bezüglich der Fahrtrichtungen 10, 11 sowohl in Vorwärtsfahrt als auch in Rückwärtsfahrt bewegt wird.

Weiters kann vorgesehen sein, dass das Fahrzeug 1 in einer beliebigen Fahrtrichtung bewegt wird, welche in einem beliebigen Winkel zwischen der ersten Fahrtrichtung 10 und der zweiten Fahrtrichtung 11 liegt.

In einer vorwiegenden Fahrstellung, auch als erste Fahrtrichtung 10 bezeichnet, kann vorgesehen sein, dass der erste Achsträger 3 bei vorwärtsfahrt vorne ist, sodass der erste Achsträger 3 auch als vorderer Achsträger bezeichnet werden kann. Der zweite Achsträger 4 kann analog dazu als hinterer Achsträger bezeichnet werden.

Weiters kann vorgesehen sein, dass eine Fahrerkabine 12 am Fahrzeug 1 angeordnet ist, wobei die Fahrerkabine 12 vorzugsweise am ersten Achsträger 3 angeordnet ist. In der Ausführungsvariante des Fahrzeuges 1 nach den Fig. 1 bis 3 ist die Fahrerkabine 12 in erster Fahrtrichtung 10 gesehen, an der linken Seite des Fahrzeuges 1 angeordnet. Mit anderen Worten ausgedrückt, kann vorgesehen sein, dass die Fahrerkabine 12 an derselben Seite des Fahrzeuges 1 angeordnet ist, wie die Verbindungskonstruktion 5. Innerhalb der Fahrerkabine 12 ist ein Führerstand angeordnet an welchem sämtliche Bedienelemente angeordnet sind und ein das Fahrzeug 1 steuernder Fahrzeuglenker platznehmen kann. In einer Weiterbildung kann vorgesehen sein, dass die Fahrerkabine 12 und/oder der Führerstand relativ zu den Achsträgern 3, 4 um eine vertikale Achse verdrehbar ausgebildet ist, sodass die Hauptblickrichtung des Fahrzeuglenkers an die jeweilig eingestellte Fahrtrichtung angepasst werden kann.

Weiters kann vorgesehen sein, dass am ersten Achsträger 3 und/oder am zweiten Achsträger 4 eine Auflageebene 13 ausgebildet ist, an welcher von der Hubeinrichtung 2 aufgenommene längliche Gegenstände abgelegt werden können. Die Auflageebene 13 kann durch die beschriebene Anordnung der Fahrerkabine 12 und der Verbindungskonstruktion 5 gebildet sein.

Der erste Achsträger 3 umfasst vorzugsweise ein erstes Radpaar 15 mit zumindest zwei Einzelrädern 16 und der zweite Achsträger 4 umfasst vorzugsweise ein zweites Radpaar 17 mit ebenfalls zumindest zwei Einzelrädern 16.

Das erste Radpaar 15 ist vorzugsweise an einer ersten Achse 18 angeordnet und das zweite Radpaar 17 ist vorzugsweise an einer zweiten Achse 19 angeordnet.

Alternativ dazu kann in einem nicht dargestellten Ausführungsbeispiel auch vorgesehen sein, dass die Radpaare 15, 17 jeweils eine Einzelradaufhängung aufweisen. Durch Verstellung des Abstandes der Schweißkonstruktion der Achsträger 3, 4 relativ zu den einzelnen Rädern 16 der Radpaare 15, 17 kann bei einer derartigen Einzelradaufhängung eine Winkelneigung der Achsträger 3, 4 und somit der Hubeinrichtung 2 einstellbar sein.

Insbesondere kann vorgesehen sein, dass zur Steuerung des Fahrzeuges 1 während dem Fahren in einer der Fahrtrichtungen nur das erste Radpaar 15 oder das zweite Radpaar 17 gelenkt wird, um das Fahrzeug 1 steuern zu können. Hierzu kann vorgesehen sein, dass das jeweilige andere Radpaar 15, 17 in der voreingestellten Stellung verbleibt.

Weiters ist es auch denkbar, dass sowohl das erste Radpaar 15 als auch das zweite Radpaar 17 gelenkt werden. Damit kann der mögliche Kurvenradius des Fahrzeuges 1 verkleinert werden.

Die Achsträger 3, 4 können in Draufsicht gesehen, in etwa einen rechteckigen Querschnitt aufweisen. Insbesondere kann vorgesehen sein, dass der erste Achsträger 3 zur Aufnahme der Fahrerkabine 12 dient und der zweite Achsträger 4 zur Aufnahme eines Antriebsmotors dient. Das Fahrzeug 1 kann mittels einem Verbrennungsmotor, wie etwa einem Dieselmotor oder einem Gasmotor, angetrieben sein, welche vorzugsweise im zweiten Achsträger 4 angeordnet sind. Dieser Verbrennungsmotor kann beispielsweise an einen Generator gekoppelt sein, wobei sämtliche Stell- und Fahrantriebe des Fahrzeuges 1 in Form eines Elektromotors ausgebildet sein können.

Alternativ dazu kann vorgesehen sein, dass der Verbrennungsmotor an ein Hydraulikaggregat gekoppelt ist und dass die Stellantriebe bzw. Fahrantriebe in Form eines Hydraulikmotors ausgebildet sind.

In wieder einer anderen Ausführungsvariante kann vorgesehen sein, dass die Stellantriebe bzw. Fahrantriebe in Form eines Elektromotors ausgebildet sind, wobei die Antriebsenergie nicht von einem Generator, sondern von einer Batterie bereitgestellt ist.

Wie aus den Figuren 1 bis 3 weiters ersichtlich, kann vorgesehen sein, dass die Hubeinrichtung 2 einen Hubmasten 20 umfasst. Der Hubmasten 20 dient zum Anheben der zu transportierenden Bauteile 21. Am Hubmasten 20 ist ein Laufwagen 22 aufgenommen, welcher in vertikaler Richtung relativ zu den Achsträgern 3, 4 verschiebbar ist. Am Laufwagen 22 sind Staplergabeln 23 angeordnet, welche zur Aufnahme des zu transportierenden Bauteiles 21 dienen. Alternativ zu Staplergabeln 23 können auch andere Aufnahmeelemente zur Aufnahme einer Last am Laufwagen 22 angeordnet sein.

Wie besonders gut aus einer Zusammenschau der Figuren 1 bis 3 ersichtlich, ist die Hubeinrichtung 2, welche den Hubmast 20 umfasst, im Freiraum 6 des Fahrzeuges 1 aufgenommen. Insbesondere kann dabei vorgesehen sein, dass an einer ersten Seite 24 des Hubmastes 20 eine erste Führungseinheit 25 angeordnet ist und an einer zweiten Seite 26 des Hubmastes 20 eine zweite Führungseinheit 27 angeordnet ist. Die Führungseinheiten 25, 27 dienen dazu, um den Hubmasten 20 in Querrichtung 9 des Fahrzeuges 1 verschiebbar im Freiraum 6 aufnehmen zu können. Dadurch können die Staplergabeln 23 und somit das zu transportierende Bauteil 21 in Querrichtung 9 seitlich aus dem Fahrzeug 1 ausgeschoben werden.

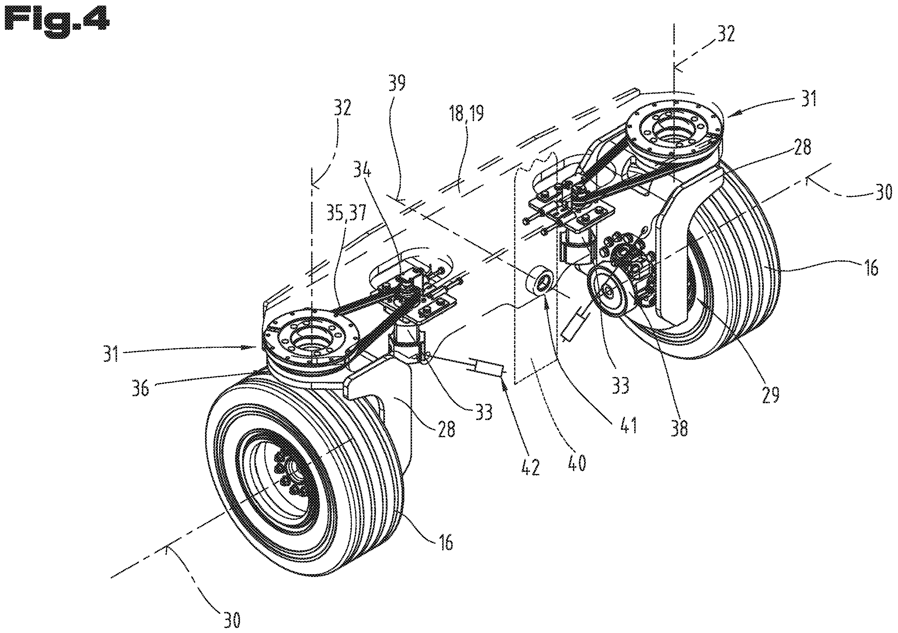

Fig. 4 zeigt eine perspektivische Ansicht der Achse 18, 19 an welcher ein Radpaar 15, 17 angeordnet ist von schräg oben, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

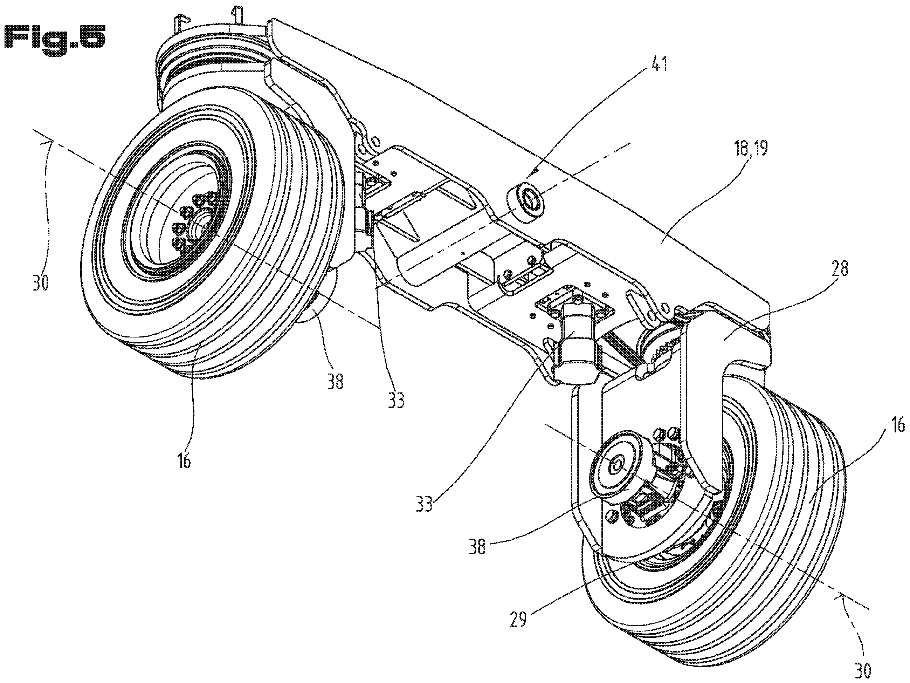

Fig. 5 zeigt eine perspektivische Ansicht der Achse 18, 19 von schräg unten, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Die folgende Beschreibung bezieht sich auf eine Zusammenschau der Figuren 4 und 5.

Bei der Darstellung in den Figuren 4 und 5 kann es sich sowohl um die erste Achse 18 als auch um die zweite Achse 19 handeln. Beide Achsen 18, 19 des Fahrzeuges 1 können gleich ausgebildet sein. Alternativ dazu ist es auch denkbar, dass die erste Achse 18 und die zweite Achse 19 des Fahrzeuges 1 unterschiedlich ausgebildet sind.

Wie aus Fig. 4 ersichtlich, kann vorgesehen sein, dass an der Achse 18, 19 jeweils im seitlichen Randbereich eine Radhalterung 28 aufgenommen ist, welche zur Aufnahme der Räder 16 dient. Die Radhalterung 28 weist eine Radiallagerung 29 auf, an welcher das Rad 16 um eine horizontal ausgerichtete Drehachse 30 drehbar an der Radhalterung 28 aufgenommen ist.

Dabei kann vorgesehen sein, dass die Radiallagerung 29 im Rad 16 angeordnet ist und an der Radhalterung 28 ein Zapfen angeordnet ist, welcher mit der Radiallagerung 29 zusammenwirkt.

Alternativ dazu kann vorgesehen sein, dass die Radiallagerung 29 direkt in der Radhalterung 28 ausgebildet ist und dass das Rad 16 fest mit einem Zapfen verbunden ist, welcher mit der Radiallagerung 29 zusammenwirkt.

Die Radhalterung 28 kann L-förmig ausgebildet sein, wobei eine Seite der Radhalterung 28 der Achse 18, 19 zugewandt ist und eine zweite Seite der Radhalterung 28 dem Rad 16 zugewandt ist.

Im dargestellten Ausführungsbeispiel ist die Radhalterung 28 als Biegeteil ausgebildet, wobei seitliche Verstrebungen zur Erhöhung der Stabilität an der Radhalterung 28 angeordnet sind.

In einem weiteren Ausführungsbeispiel kann vorgesehen sein, dass die Radhalterung 28 als Gussteil ausgebildet ist.

Wie weiters aus Fig. 4 ersichtlich, kann vorgesehen sein, dass an der Radhalterung 28 eine Axiallagerung 31 ausgebildet ist, mittels welcher die Radhalterung 28 um eine vertikal ausgerichtete Drehachse 32 drehbar an der Achse 18, 19 aufgenommen ist. Die Axiallagerung 31 kann beispielsweise in Form eines Wälzlagerringes ausgebildet sein. Alternativ dazu ist es auch denkbar, dass die Axiallagerung 31 durch eine Gleitlagerung gebildet wird.

Durch die Axiallagerung 31 kann erreicht werden, dass jede der einzelnen Radhalterungen 28 individuell und unabhängig voneinander relativ zum Achsträger 3, 4 respektive zur Achse 18, 19 verdrehbar sind.

Insbesondere ist vorgesehen, dass die vertikal ausgerichtete Drehachse 32 der Axiallagerung 31 und die horizontal ausgerichtete Drehachse 30 der Radiallagerung 29 in einem Winkel von 90° zueinander ausgerichtet sind.

Die Achse 18, 19 bzw. die die Radhalterung 28 sind vorzugsweise derart ausgebildet, dass die Radhalterung 28 in einem Winkel von 360° frei um die vertikal ausgerichtete Drehachse 32 drehbar an der Achse 18, 19 aufgenommen ist.

Weiters kann ein Drehmotor 33 vorgesehen sein, welcher zum Antrieb der Drehbewegung der Radhalterung 28 um die vertikal ausgerichtete Drehachse 32 ausgebildet ist.

Der Drehmotor 33 kann, wie aus Fig. 4 ersichtlich, mit einem Ritzel 34 gekoppelt sein, welches über ein Zugmittel 35 mit einem Zahnrad 36 bewegungsgekoppelt ist. Das Zahnrad 36 ist hierbei direkt mit der Radhalterung 28 gekoppelt und dient zum Einleiten einer Drehbewegung der Radhalterung 28 um die vertikal ausgerichtete Drehachse 32. Das Zugmittel 35 ist dabei umlaufend zwischen dem Ritzel 34 und dem Zahnrad 36 gespannt.

In einer bevorzugten Ausführungsvariante ist vorgesehen, dass das Zugmittel 35 als Antriebskette 37 ausgebildet ist.

In einer weiteren Ausführungsvariante kann auch vorgesehen sein, dass das Zugmittel 35 in Form eines Zahnriemens ausgebildet ist.

In wieder einer anderen Ausgangsvariante kann auch vorgesehen sein, dass das Ritzel 34 des Drehmotors 33 und das Zahnrad 36 an der Radhalterung 28 mittels einem weiteren, zwischenliegenden Zahnrad bewegungsgekoppelt ist.

In wieder einer anderen Ausführungsvariante kann vorgesehen sein, dass der Drehmotor 33 an der vertikal ausgerichteten Drehachse 32 platziert ist und eine Ausgangswelle des Drehmotors 33 direkt mit der Radhalterung 28 bewegungsgekoppelt ist.

Der Drehmotor 33 kann beispielsweise in Form eines Hydraulikmotors oder etwa in Form eines Elektromotors ausgebildet sein.

In wieder einer anderen, nicht beanspruchten Ausführungsvariante kann vorgesehen sein, dass ein anderes Stellmittel, wie etwa ein Hydraulikzylinder, zum Verdrehen der Radhalterung 28 bezüglich der vertikal ausgerichteten Drehachse 32 ausgebildet ist.

Weiters kann vorgesehen sein, dass an der Radhalterung 28 ein Antriebsmotor 38 zum Antrieb der Räder 16 ausgebildet ist. Der Antriebsmotor 38 zum Antrieb der Räder 16 kann beispielsweise ebenfalls in Form eines Hydraulikmotors oder eines Elektromotors ausgebildet sein. Insbesondere kann vorgesehen sein, dass zumindest zwei der Räder 16 des Fahrzeuges 1 mittels einem eigenen Antriebsmotor 38 angetrieben werden.

In einer weiteren Ausführungsvariante kann vorgesehen sein, dass drei der Räder 16 von einem eigenen Antriebsmotor 38 angetrieben werden.

In wieder einer anderen Ausführungsvariante kann vorgesehen sein, dass sämtliche der Räder 16 von einem eigenen Antriebsmotor 38 angetrieben werden.

Weiters kann vorgesehen sein, dass die Achse 18, 19 um eine horizontale Drehachse 39 drehbar an einer Achsaufnahme 40 des Achsträgers 3, 4 aufgenommen ist. Dadurch kann erreicht werden, dass die Achse 18, 19 pendelnd am Achsträger 3, 4 aufgenommen ist. Um dies zu erreichen, kann vorgesehen sein, dass eine Drehlagerung 41 ausgebildet ist, welche zwischen der Achse 18, 19 und der Achsaufnahme 40 wirkt.

Die Drehlagerung 41 kann, wie in Fig. 4 dargestellt, mittig der Achse 18, 19 angeordnet sein. Somit können die vertikal ausgerichteten Drehachsen 32 beide einen gleichen Normalabstand von der horizontalen Drehachse 39 der Achse 18, 19 aufweisen. Somit werden bei einer Verkippung der Achse 18, 19 relativ zum Achsträger 3, 4 die beiden an einer Achse 18, 19 angeordneten Räder 16 um den gleichen Betrag jeweils gegensinnig in Richtung zum Achsträger 3, 4 bewegt bzw. von diesem wegbewegt.

Wie aus Fig. 4 ersichtlich, kann vorgesehen sein, dass zur horizontalen Drehachse 39 beabstandet ein Stellmittel 42 angeordnet ist, welches zum Einstellen der Neigung zwischen der Achse 18, 19 und dem Achsträger 3, 4 dient. Hierbei kann das Stellmittel 42 an einem ersten Angriffspunkt mit der Achse 18, 19 gekoppelt sein und an einem zweiten Angriffspunkt mit dem Achsträger 3, 4 gekoppelt sein und sich somit zwischen diesen erstrecken.

Das Stellmittel 42 kann beispielsweise in Form eines Hydraulikzylinders ausgebildet sein.

In einer alternativen Ausführungsvariante kann auch vorgesehen sein, dass das Stellmittel 42 in Form eines Spindeltriebes ausgebildet ist.

Insbesondere kann durch Veränderung der Länge des Stellmittels 42 der Winkel zwischen der Achse 18, 19 und dem Achsträger 3, 4 eingestellt werden. Wie in der Ausführungsvariante nach Fig. 4 ersichtlich, kann vorgesehen sein, dass an beiden Seiten der Achse 18, 19 ein Stellmittel 42 angeordnet ist. Dadurch kann erreicht werden, dass die auf das Stellmittel 42 wirkende Kraft halbiert wird. Dabei ist jedoch darauf zu achten, dass die beiden Stellmittel 42 synchron zueinander bewegt werden, da das mechanische System aus Drehlagerung 41 und zwei Stellmittel 42 mechanisch überbestimmt ist. Um eine ausreichend genaue Positionierung der Stellmittel zu erreichen, können entsprechende Sensoren zur Längenerfassung an den Stellmitteln 42 ausgebildet sein.

In einer weiteren Ausführungsvariante kann auch vorgesehen sein, dass das Stellmittel 42 in Form eines Drehmotors ausgebildet ist, welcher beispielsweise am Achsträger 3, 4 angeordnet ist und dessen Abtriebswelle mit der Achse 18, 19 gekoppelt ist. Diese Kopplung der Abtriebswelle des Drehmotors mit der Achse 18, 19 kann beispielsweise auch unter Zwischenschaltung eines Übersetzungsgetriebes realisiert sein.

In einer Weiterbildung kann auch vorgesehen sein, dass im Bereich der Verbindungskonstruktion 5 oder an sonstiger Stelle ein Sensor angeordnet ist, welcher die Verwindung der Verbindungskonstruktion 5 bzw. das an der Verbindungskonstruktion 5 auftretende Drehmoment misst. Mithilfe der Sensordaten kann mittels der einzelnen Stellmittel 42 eine übermäßige Verwindung der Verbindungskonstruktion 5 durch Einstellen einer unterschiedlichen Neigung der ersten Achse 18 und der zweiten Achse 19 ausgeglichen werden.

Dies kann insbesondere notwendig sein, wenn der Abstand zwischen der ersten Achse 18 und der zweiten Achse 19 eine große Länge aufweist und wenn gleichzeitig der Untergrund an welchem das Fahrzeug 1 betrieben werden soll sehr uneben ist.

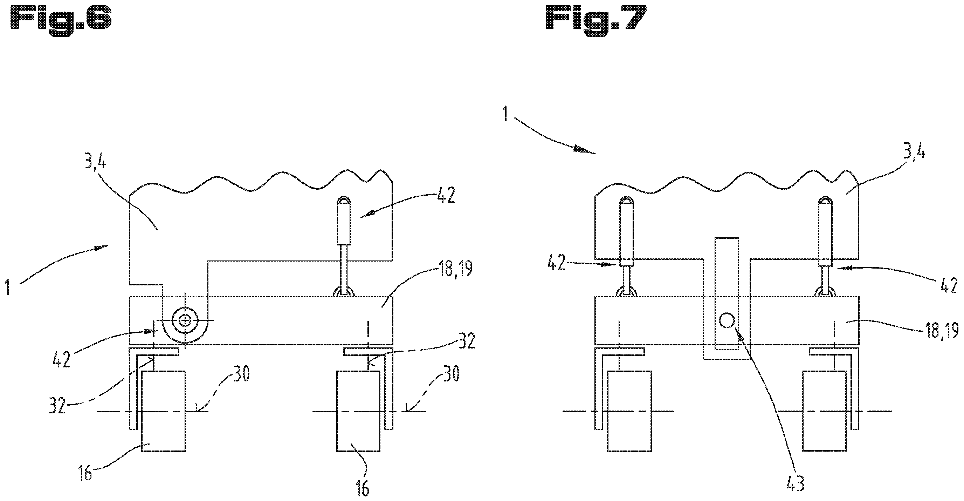

Fig. 6 zeigt eine schematische Darstellung eines weiteren Ausführungsbeispiels des Fahrzeuges 1, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie in der alternativen Ausführungsvariante entsprechend Fig. 6 dargestellt, ist es auch denkbar, dass die Drehlagerung 41 nicht mittig der Achse 18, 19 angeordnet ist, sondern dass die Drehlagerung 41 nahe einem der Räder 16 angeordnet ist. Dadurch kann erreicht werden, dass bei Verkippung der Achse 18, 19 relativ zum Achsträger 3, 4 der Abstand zumindest eines der Räder zum Achsträger 3, 4 unverändert oder zumindest nahezu unverändert bleibt und nur der Abstand des zweiten Rades 16 vom Achsträger 3, 4 verändert wird.

Im Ausführungsbeispiel nach Fig. 6 ist nur ein Stellmittel 42 vorhanden, wobei das Stellmittel 42 an einer der Drehlagerung 41 gegenüberliegenden Seite der Achse 18, 19 angeordnet ist.

Fig. 7 zeigt eine schematische Darstellung einer weiteren Ausführungsvariante der Verbindung zwischen dem Achsträger 3, 4 und der Achse 18, 19, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass an der ersten Seite der Achse 18, 19 ein erstes Stellmittel 42 angeordnet ist und an der zweiten Seite der Achse 18, 19 ein zweites Stellmittel 42 angeordnet ist, wobei die Achse 18, 19 nicht über einen fixen Drehpunkt mit dem Achsträger 3, 4 verbunden ist, sondern über eine Linearführung 43 gegen horizontale Verschiebung zwischen Achse 18, 19 und Achsträger 3, 4 gesichert ist. Durch die Linearführung 43 ist eine vertikale Verschiebung zwischen Achse 18, 19 und Achsträger 3, 4 möglich.

Die Linearführung 43 kann beispielsweise in Form einer Kulissenführung ausgebildet sein.

Alternativ dazu kann auch vorgesehen sein, dass die Linearführung 43 in Form einer sonstigen formschlüssigen Gleitlagerführung, wie etwa einer Schwalbenschwanzführung ausgebildet ist.

In wieder einer anderen Alternativvariante kann auch vorgesehen sein, dass die Linearführung 43 in Form einer Kugelumlaufführung ausgebildet ist.

Durch den Einsatz einer Linearführung 43 zusammen mit zwei unabhängig voneinander agierenden Stellmitteln 42 kann erreicht werden, dass zum Verkippen der Achse 18, 19 relativ zum Achsträger 3, 4 in einem bestimmten Winkel die horizontale Drehachse 39 als virtuelle Achse ausgebildet sein kann und diese beliebig eine Position zwischen den beiden Stellmitteln 42 einnehmen kann.

Beispielsweise ist es denkbar, dass eines der beiden Stellmittel 42 um einen Betrag x verlängert wird und das zweite der beiden Stellmittel 42 um den gleichen Betrag x verkürzt wird, somit liegt die virtuelle horizontale Drehachse 39 genau zwischen den beiden Stellmitteln 42. In einem weiteren Anwendungsfall ist es denkbar, dass zum Einstellen eines Kippwinkels der Achse eines der beiden Stellmittel 42 unverändert in dessen Position gelassen wird und das zweite der beiden Stellmittel 42 um einen gewissen Betrag verlängert oder verkürzt wird. Dadurch ergibt sich eine Drehachse 39 exakt im Angriffspunkt jenes Stellmittels 42 welches unverändert in dessen Position belassen wird. Natürlich ist es auch denkbar, durch entsprechende unterschiedlich große Verstellung der Stellmittel 42 eine beliebige Position der horizontalen Drehachse 39 einzustellen.

In wieder einer anderen Anwendungsvariante ist es denkbar, dass beide Stellmittel 42 gleichzeitig verlängert bzw. verkürzt werden und somit der Abstand des Achsträger 3, 4 relativ zu Achse 18, 19 verändert wird, ohne dabei die Verkippung des Achsträgers 3, 4 relativ zur Achse 18, 19 zu verändern.

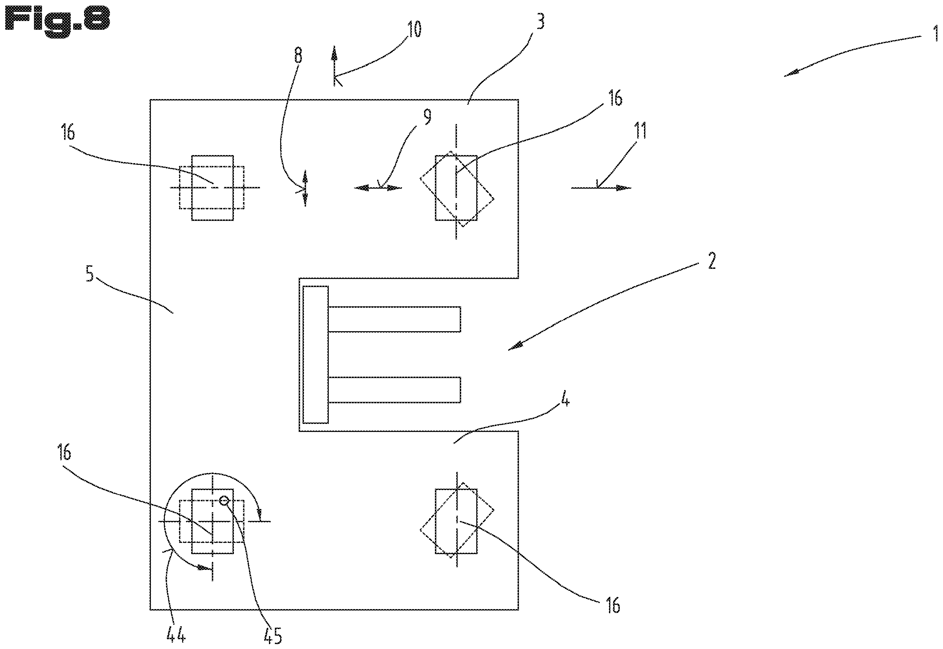

Fig. 8 zeigt ein weiteres Ausführungsbeispiel des Fahrzeuges 1 in einer schematischen Ansicht von unten, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass jedes der Räder 16 einzeln und unabhängig voneinander bezüglich deren Fahrtrichtung relativ zum Fahrzeug 1 verdrehbar sind. Optimal erscheint es hierbei, wenn jedes der Räder 16 um einen Drehwinkel 44 von etwa 270° relativ zum Fahrzeug 1 verdrehbar ist. Dies erscheint aus mehreren Gründen sinnvoll. Zum einen kann durch eine begrenzte Drehbarkeit des Rades 16 relativ zum Achsträger 3, 4 erreicht werden, dass diverse Kraftversorgungsleitungen, wie etwa Elektrikleitungen oder Hydraulikleitungen vom Achsträger 3, 4 zur jeweiligen Radhalterung 28 geführt werden können, um beispielsweise den Antriebsmotor 38 für die Räder 16 mit Energie versorgen zu können.

Andererseits kann dadurch erreicht werden, dass sowohl bei Hauptausrichtung der Räder 16 in erster Fahrtrichtung 10 beispielsweise die Räder 16 des zweiten Achsträgers 4 entweder 90° nach links oder 90° nach rechts geschwenkt werden können, um einen maximalen Einschlag bzw. eine maximale Lenkbewegung des Fahrzeuges 1 erreichen zu können. Bei einer Hauptausrichtung aller Räder 16 in die zweite Fahrtrichtung 11 können beispielsweise jene Räder 16, welche im Bereich der Verbindungskonstruktion 5 angeordnet sind, ebenfalls um einen Winkel von 90° nach links oder nach rechts von der zweiten Fahrtrichtung 11 abgeschwenkt werden, um ein maximales Einlenken des Fahrzeuges 1 zu ermöglichen.

Da es nicht immer zwingend erforderlich ist, dass der maximale Einschlag +/- 90° beträgt, kann es auch zweckmäßig sein, wenn der maximale Drehwinkel 44 kleiner als 270° ist.

Weiters kann ein Drehwinkelsensor 45 vorgesehen sein, welcher zur Erfassung des Drehwinkels 44 ausgebildet ist und die aktuelle Lage aller Räder 16 anzeigt.

Zum Bewegen des Fahrzeuges 1 gibt es mehrere verschiedene Möglichkeiten wie die einzelnen Räder 16 ausgerichtet sein können. Beispielsweise ist es denkbar, dass sämtliche Räder 16 in erster Fahrtrichtung 10 ausgerichtet sind. Dabei können beispielsweise entweder die Räder 16 des ersten Achsträgers 3 oder die Räder 16 des zweiten Achsträgers 4 gleichermaßen gelenkt werden, wobei die Räder 16 des jeweiligen anderen Achsträgers 3, 4 unverändert in erster Fahrtrichtung 10 ausgerichtet bleiben. Dies entspricht der herkömmlichen Lenkung eines Seitenstaplers.

Weiters ist es auch denkbar, dass zum Fahren einer Kurve sowohl die Räder 16 des ersten Achsträgers 3 als auch die Räder 16 des zweiten Achsträgers 4 gelenkt werden.

Analog zu der beschriebenen Fahrtrichtung 10 kann auch vorgesehen sein, dass sämtliche Räder 16 in zweiter Fahrtrichtung 11 ausgerichtet sind und dass entweder die im Bereich der Verbindungskonstruktion 5 oder die im Bereich des Freiraumes 6 angeordneten Räder 16 gemeinsam gelenkt werden.

In wieder einer anderen Betriebsvariante ist es denkbar, dass sämtliche Räder 16 in einem Winkel von 45° zwischen erster Fahrtrichtung 10 und zweiter Fahrtrichtung 11 ausgerichtet werden und somit das Fahrzeug 1 in einem Winkel von 45° parallel verschoben werden kann. Diese Möglichkeit zur Parallelverschiebung ist natürlich stufenlos zwischen erster Fahrtrichtung 10 und zweiter Fahrtrichtung 11 möglich.

In einer weiteren Betriebsvariante des Fahrzeuges 1 kann vorgesehen sein, dass sämtliche Räder 16 tangential zu einem Fahrzeugmittelpunkt ausgerichtet sind und somit das Fahrzeug 1 um den Fahrzeugmittelpunkt gedreht werden kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fahrzeug | 30 | horizontal ausgerichtete Drehachse |
| 2 | Hubeinrichtung | 31 | Axiallagerung |
| 3 | erster Achsträger | 32 | vertikal ausgerichtete Drehachse |
| 4 | zweiter Achsträger | 33 | Drehmotor |
| 5 | Verbindungskonstruktion | 34 | Ritzel |
| 6 | Freiraum | 35 | Zugmittel |
| 7 | Längsachse Fahrzeug | 36 | Zahnrad |
| 8 | Längsrichtung des Fahrzeuges | 37 | Antriebskette |
| 9 | Querrichtung des Fahrzeuges | 38 | Antriebsmotor für Räder |
| 10 | erste Fahrtrichtung | 39 | horizontale Drehachse der Achse |
| 11 | zweite Fahrtrichtung | 40 | Achsaufnahme |
| 12 | Fahrerkabine | 41 | Drehlagerung |
| 13 | Auflageebene | 42 | Stellmittel |
| 14 | Rand des Achsträgers | 43 | Linearführung |
| 15 | erstes Radpaar erster Achsträger | 44 | Winkel |
| 16 | Rad | 45 | Drehwinkelsensor |
| 17 | zweites Radpaar zweiter Achsträger | | |
| 18 | erste Achse | | |
| 19 | zweite Achse | | |
| 20 | Hubmast | | |
| 21 | zu transportierendes Bauteil | | |
| 22 | Laufwagen | | |
| 23 | Staplergabel | | |
| 24 | erste Seite Hubmast | | |
| 25 | erste Führungseinheit | | |
| 26 | zweite Seite Hubmast | | |
| 27 | zweite Führungseinheit | | |
| 28 | Radhalterung | | |
| 29 | Radiallagerung | | |

## Patentansprüche

1. Fahrzeug (1) mit seitlicher Hubeinrichtung (2), insbesondere Seitenstapler, umfassend zumindest einen ersten Achsträger (3) und einen zweiten Achsträger (4), wobei die beiden Achsträger (3, 4) mittels einer seitlich außermittig angeordneten Verbindungskonstruktion (5) miteinander gekoppelt sind und wobei die Hubeinrichtung (2) in einem Freiraum (6) zwischen den beiden Achsträgern (3, 4) angeordnet ist, wobei die Verbindungskonstruktion (5) am seitlichen Rand (14) der Achsträger (3, 4) angeordnet ist, sodass das Fahrzeug (1) in Draufsicht U-Förmig ausgebildet ist und wobei die beiden parallel zueinander liegenden Schenkel des U-Förmig ausgebildeten Fahrzeuges (1) durch die Achsträger (3, 4) gebildet sind und der Freiraum (6) zur Aufnahme der Hubeinrichtung (2) an der offenen Seite der U-Förmigen Anordnung ausgebildet ist, wobei der erste Achsträger (3) ein erstes Radpaar (15) und der zweite Achsträger (4) ein zweites Radpaar (17) aufweist, wobei jedes der einzelnen Räder (16) der Radpaare (15, 17) um eine vertikal ausgerichtete Drehachse (32) drehbar gelagert ist, und dass das Fahrzeug (1) in einer ersten Fahrtrichtung (10) parallel zu einer Längsachse (7) des Fahrzeuges (1) bewegbar ist und in einer zweiten Fahrtrichtung (11) quer zur Längsachse (7) des Fahrzeuges (1) bewegbar ist, wobei am ersten Achsträger (3) eine erste Achse (18) ausgebildet ist, welche zur Aufnahme des ersten Radpaares (15) dient und am zweiten Achsträger (4) eine zweite Achse (19) ausgebildet ist, welche zur Aufnahme des zweiten Radpaares (17) dient, wobei die Achsen (18, 19) jeweils bezüglich einer horizontalen Drehachse (39) pendelnd gelagert am Achsträger (3, 4) aufgenommen sind, **dadurch gekennzeichnet, dass** je Radhalterung (28) ein Drehmotor (33) ausgebildet ist, an welchem ein Ritzel (34) angeordnet ist und mittels einer mechanischen Kopplung, vorzugsweise einem umlaufenden Zugmittel (35), mit einem an der Radhalterung (28) ausgebildeten Zahnrad (36) gekoppelt ist, wobei jede der einzelnen Radhalterungen (28) individuell und unabhängig voneinander relativ zum Achsträger (3, 4) respektive zur Achse (18, 19) verdrehbar sind.

2. Fahrzeug nach Anspruch 1, **dadurch gekennzeichnet, dass** jedes der einzelnen Räder (16) an einer Radhalterung (28) aufgenommen ist, welche Radhalterung (28) eine Radiallagerung (29) mit horizontal ausgerichteter Drehachse (30) zur drehbaren Aufnahme eines Rades (16) aufweist und eine Axiallagerung (31) mit vertikal ausgerichteter Drehachse (32) aufweist mittels welcher die Radhalterung (28) frei um die vertikal ausgerichtete Drehachse (32) drehbar an den Achsträgern (3, 4) gelagert sind.

3. Fahrzeug nach Anspruch 1 oder 2, **dadurch gekennzeichnet, dass** die Achsen (18, 19) jeweils in etwa mittig der Achsträger (3, 4) bezüglich einer horizontalen Drehachse (39) pendelnd gelagert aufgenommen sind.

4. Fahrzeug nach Anspruch 1 oder 2, **dadurch gekennzeichnet, dass** die Achsen jeweils außermittig der Achsträger (3, 4) bezüglich einer horizontalen Drehachse (39) pendelnd gelagert aufgenommen sind.

5. Fahrzeug nach Anspruch 3 oder 4, **dadurch gekennzeichnet, dass** die Achsen (18, 19) jeweils mittels zumindest einem zur horizontalen Drehachse (39) beabstandet angeordneten Stellmittel (42) mit dem jeweiligen Achsträger (3, 4) gekoppelt sind.

6. Fahrzeug nach einem der vorhergehenden Ansprüche, **dadurch gekennzeichnet, dass** die einzelnen Räder (16) mittels der an der Radhalterung (28) ausgebildeten Axiallagerung (31) mit vertikal ausgerichteter Drehachse (32) frei drehbar an den Achsen (18, 19) der Achsträger (3, 4) aufgenommen sind.

7. Fahrzeug nach einem der vorhergehenden Ansprüche, **dadurch gekennzeichnet, dass** die Achsen (18, 19) jeweils mittels zumindest zweier zueinander beabstandeter Stellmittel (42) mit dem jeweiligen Achsträger (3, 4) gekoppelt sind und durch Verstellung der Stellmittel (42) die Achse (18, 19) bezüglich dem Achsträger (3, 4) um eine virtuellen horizontale Drehachse (39) verschwenkbar ist.

8. Fahrzeug nach einem der vorhergehenden Ansprüche, **dadurch gekennzeichnet, dass** das Zugmittel (35) in Form einer Antriebskette (37) ausgebildet ist.

9. Fahrzeug nach einem der vorhergehenden Ansprüche, **dadurch gekennzeichnet, dass** der Drehmotor (33) als Hydraulikmotor ausgebildet ist.

10. Fahrzeug nach einem der vorhergehenden Ansprüche, **dadurch gekennzeichnet, dass** jedes der einzelnen Räder (16) des Fahrzeuges (1) jeweils mit einem Antriebsmotor (38) zum Antrieb der Räder (16) gekoppelt ist.

11. Fahrzeug nach Anspruch 10, **dadurch gekennzeichnet, dass** der Antriebsmotor (38) zum Antrieb der Räder (16) als Hydraulikmotor ausgebildet ist.

12. Fahrzeug nach einem der vorhergehenden Ansprüche, **dadurch gekennzeichnet, dass** die Radhalterung (28) in der vertikal ausgerichteten Drehachse (32) um einen maximalen Winkel (44) zwischen 180° und 400°, insbesondere zwischen 210° und 360°, bevorzugt zwischen 250° und 290° verdrehbar ist.

13. Fahrzeug nach einem der vorhergehenden Ansprüche, **dadurch gekennzeichnet, dass** die Hubeinrichtung (2) einen Hubmasten (20) umfasst, welcher im Freiraum (6) des Fahrzeuges (1) aufgenommen ist, wobei der Hubmasten (20) in Querrichtung (9) des Fahrzeuges (1) verschiebbar im Freiraum (6) aufgenommen ist.

14. Fahrzeug nach einem der vorhergehenden Ansprüche, **dadurch gekennzeichnet, dass** zumindest zwei der Räder (16) einen Durchmesser zwischen 10 Zoll und 50 Zoll (25,4 cm und 127 cm), insbesondere zwischen 12 Zoll und 50 Zoll (30,5 cm und 127 cm), bevorzugt zwischen 14 Zoll und 50 Zoll (35,6 cm und 127 cm), aufweisen.

15. Fahrzeug nach einem der Ansprüche 1 bis 14, **dadurch gekennzeichnet, dass** alle der Räder (16) einen Durchmesser zwischen 10 Zoll und 50 Zoll (25,4 cm und 127 cm), insbesondere zwischen 12 Zoll und 50 Zoll (30,5 cm und 127 cm), bevorzugt zwischen 14 Zoll und 50 Zoll (35,6 cm und 127 cm), aufweisen.

16. Fahrzeug nach einem der vorhergehenden Ansprüche, **dadurch gekennzeichnet, dass** eine Auflageebene (13) ausgebildet ist, an welcher von der Hubeinrichtung (2) aufgenommene längliche Gegenstände abgelegt werden können, wobei die Auflageebene (13) oberhalb der Räder (16) angeordnet ist.

## Claims

1. A vehicle (1) having a lateral lifting device (2), in particular a side loader, comprising at least a first axle carrier (3) and a second axle carrier (4), wherein the two axle carriers (3, 4) are coupled with one another by means of a connecting structure (5) that is arranged laterally outside the center, and wherein the lifting device (2) is arranged in a free space (6) between the two axle carriers (3, 4), wherein the connecting structure (5) is arranged at the lateral edge (14) of the axle carriers (3, 4), so that the vehicle (1) is configured in a U shape in a top view, and wherein the two shanks of the vehicle (1) configured in a U shape, which shanks lie in parallel to one another, are formed by the axle carriers (3, 4), and the free space (6) for accommodating the lifting device (2) is configured on the open side of the U-shaped arrangement, wherein the first axle carrier (3) has a first wheel pair (15), and the second axle carrier (4) has a second wheel pair (17), wherein each of the individual wheels (16) of the wheel pairs (15, 17) is mounted so as to be rotatable about a vertically oriented axis of rotation (32), and that the vehicle (1) is movable in a first travel direction (10) parallel to a longitudinal axis (7) of the vehicle (1) and is movable in a second travel direction (11) transverse to the longitudinal axis (7) of the vehicle (1), wherein a first axle (18) is configured on the first axle carrier (3), which axle (18) serves for accommodating the first wheel pair (15), and a second axle (19) is configured on the second axle carrier (4), which axle (19) serves for accommodating the second wheel pair (17), wherein the axles (18, 19) are accommodated, in each case, on the axle carrier (3, 4) so as to be mounted in pendulum manner with respect to a horizontal axis of rotation (39), **characterized in that** per wheel holder (28) one rotating motor (33) is configured, on which a pinion (34) is arranged and coupled, by means of a mechanical coupling, preferable a circumferential traction means (35), to a gear (36) configured on the wheel holder (28), wherein each of the individual wheel holders (28) are rotatable individually and independently from one another relative to the axle carrier (3, 4) or the axle (18, 19).

2. The vehicle according to claim 1, **characterized in that** each of the individual wheels (16) is accommodated on a wheel holder (28), which wheel holder (28) has a radial bearing (29) with a horizontally oriented axis of rotation (30) for accommodating a wheel (16) in rotatable manner, and an axial bearing (31) having a vertically oriented axis of rotation (32), by means of which the wheel holder (28) are mounted on the axle carriers (3, 4) so as to be freely rotatable about the vertically oriented axis of rotation (32).

3. The vehicle according to claim 1 or 2, **characterized in that** the axles (18, 19) are held, in each case, approximately in the center of the axle carriers (3, 4) with respect to a horizontal axis of rotation (39), mounted in pendulum manner.

4. The vehicle according to claim 1 or 2, **characterized in that** the axles are held, in each case, outside the center of the axle carriers (3, 4) with respect to a horizontal axis of rotation (39), mounted in pendulum manner.

5. The vehicle according to claim 3 or 4, **characterized in that** the axles (18, 19) are coupled with the respective axle carrier (3, 4), in each case by means of at least one actuating means (42) arranged at a distance from the horizontal axis of rotation (39).

6. The vehicle according to one of the preceding claims, **characterized in that** the individual wheels (16) are accommodated, by means of the axial bearing (31) configured on the wheel holder (28), so as to be freely rotatable on the axles (18, 19) of the axle carriers (3, 4) and having a vertically oriented axis of rotation (32).

7. The vehicle according to one of the preceding claims, **characterized in that** the axles (18, 19) are coupled with the respective axle carrier (3, 4), in each case by means of at least two actuating means (42) that are spaced apart from one another, and that the axle (18, 19) is pivotable about a virtual horizontal axis of rotation (39) with respect to the axle carrier (3, 4) by means of adjusting the actuating means (42).

8. The vehicle according to one of the preceding claims, **characterized in that** the traction means (35) is configured in the form of a drive chain (37).

9. The vehicle according to one of the preceding claims, **characterized in that** the rotating motor (33) is formed as a hydraulic motor.

10. The vehicle according to one of the preceding claims, **characterized in that** each of the individual wheels (16) of the vehicle (1) is coupled with a corresponding drive motor (38) for driving the wheels (16).

11. The vehicle according to claim 10, **characterized in that** the drive motor (38) is configured as a hydraulic motor for driving the wheels (16).

12. The vehicle according to one of the preceding claims, **characterized in that** the wheel holder (28) is rotatable, in the vertically oriented axis of rotation (32), about a maximum angle (44) of between 180° and 400°, in particular between 210° and 360°, preferably between 250° and 290°.

13. The vehicle according to one of the preceding claims, **characterized in that** the lifting device (2) comprises a lifting mast (20), which is accommodated in the free space (6) of the vehicle (1), wherein the lifting mast (20) is accommodated in the free space (6) so as to be displaceable in the transverse direction (9) of the vehicle (1).

14. The vehicle according to one of the preceding claims, **characterized in that** at least two wheels (16) have a diameter of between 10 inches and 50 inches (25.4 cm and 127 cm), in particular between 12 inches and 50 inches (30.5 cm and 127 cm), preferably between 14 inches and 50 inches (35.6 cm and 127 cm).

15. The vehicle according to one of claims 1 to 14, **characterized in that** all of the wheels (16) have a diameter of between 10 inches and 50 inches (25.4 cm and 127 cm), in particular between 12 inches and 50 inches (30.5 cm and 127 cm), preferably between 14 inches and 50 inches (35.6 cm and 127 cm).

16. The vehicle according to one of the preceding claims, **characterized in that** a support plane (13) is configured, on which oblong objects picked up by the lifting device (2) can be placed down, wherein the support plane (13) is arranged above the wheels (16).

## Revendications

1. Véhicule (1) avec dispositif de levage latéral (2), plus particulièrement chariot élévateur latéral, comprend au moins un premier support d'essieu (3) et un deuxième support d'essieu (4), dans lequel les deux supports d'essieux (3, 4) sont couplés entre eux au moyen d'une structure de liaison (5) disposée sur le côté de manière excentrée et dans lequel le dispositif de levage (2) est disposé dans un espace libre (6) entre les deux supports d'essieux (3, 4), dans lequel la structure de liaison (5) est disposé sur le bord latéral (14) des supports d'essieux (3, 4), de façon à ce que le véhicule (1) soit réalisé en forme de U en vue de dessus, et dans lequel les deux branches parallèles du véhicule (1) conçu en forme de U sont constituées des supports d'essieux (3, 4) et l'espace libre (6) est conçu pour le logement du dispositif de levage (2) sur le côté ouvert de la disposition en forme de U, dans lequel le premier support d'essieu (3) comprend une première paire de roues (15) et le deuxième support d'essieu (4) comprend une deuxième paire de roues (17), dans lequel chacune des roues individuelles (16) des paires de roues (15, 17) est montée de manière rotative autour d'un axe de rotation (32) orienté verticalement et en ce que le véhicule (1) est mobile dans une première direction de marche (10) parallèlement à un axe longitudinal (7) du véhicule (1) et dans une deuxième direction de marche (11) transversal par rapport à l'axe longitudinal (7) du véhicule (1), dans lequel, sur le premier support d'essieu (3), est réalisé un premier essieu (18) qui sert à loger la première paire de roues (15) et, sur le deuxième support d'essieu (4), est réalisé un deuxième essieu (19) qui sert à loger la deuxième paire de roues (17), dans lequel les essieux (18, 19) sont logés chacun de manière oscillante par rapport à un axe de rotation horizontal (39) sur le support d'essieu (3, 4) correspondant, **caractérisé en ce que**, sur chaque support de roue (28) est disposé un moteur rotatif (33) sur lequel est disposé un pignon (34) et, au moyen d'un couplage mécanique, de préférence un moyen de traction rotatif (35), est couplé avec une roue dentée (36) prévue sur le support de roue (28), dans lequel chacun des supports de roues (28) peut tourner de manière individuelle et indépendamment l'un de l'autre par rapport au support d'essieu (3, 4) correspondant à l'essieu (18, 19).

2. Véhicule selon la revendication 1, **caractérisé en ce que** chacune des roues individuelles (16) est logée sur un support de roue (28), ce support de roue (28) comprenant un palier radial (29) avec un axe de rotation (30) orienté horizontalement, pour le logement rotatif d'une roue (16) et un palier axial (31) avec un axe de rotation (32) orienté verticalement, au moyen duquel le support de roue (28) est monté sur les supports d'essieux (3, 4) de manière rotative autour de l'axe de rotation (32) orienté verticalement.

3. Véhicule selon la revendication 1 ou 2, **caractérisé en ce que** les essieux (18, 19) sont montés de manière oscillante par rapport à un axe de rotation horizontal (39), chacun approximativement au centre des supports d'essieux (3, 4).

4. Véhicule selon la revendication 1 ou 2, **caractérisé en ce que** les essieux sont montés de manière oscillante par rapport à un axe de rotation horizontal (39), chacun de manière excentrée par rapport aux supports d'essieux (3, 4).

5. Véhicule selon la revendication 3 ou 4, **caractérisé en ce que** les essieux (18, 19) sont couplés avec le support d'essieu (3, 4) correspondant, chacun à l'aide d'au moins d'un moyen de réglage (42) disposé de manière distante par rapport à l'axe de rotation horizontal (39).

6. Véhicule selon l'une des revendications précédentes, **caractérisé en ce que** les roues individuelles (16) sont logées sur les essieux (18, 19) des supports d'essieux (3, 4) de manière librement rotative au moyen du palier axial (31) prévu sur le support de roue (28), avec un axe de rotation (32) orienté verticalement.

7. Véhicule selon l'une des revendications précédentes, **caractérisé en ce que** les essieux (18, 19) sont couplés chacun, à l'aide d'au moins deux moyens de réglage (42) distants entre eux, avec le support d'essieu (3, 4) correspondant et le réglage des moyens de réglage (42) permet de faire pivoter l'essieu (18, 19) par rapport au support d'essieu (3, 4) autour d'un axe de rotation horizontal virtuel (39).

8. Véhicule selon l'une des revendications précédentes, **caractérisé en ce que** le moyen de traction (35) se présente sous la forme d'une chaîne d'entraînement (37).

9. Véhicule selon l'une des revendications précédentes, **caractérisé en ce que** le moteur rotatif (33) est conçu comme un moteur hydraulique.

10. Véhicule selon l'une des revendications précédentes, **caractérisé en ce que** chacune des roues individuelles (16) du véhicule (1) est couplée à un moteur d'entraînement (38) pour l'entraînement des roues (16).

11. Véhicule selon la revendication 10, **caractérisé en ce que** le moteur d'entraînement (38) pour l'entraînement des roues (16) est conçu comme un moteur hydraulique.

12. Véhicule selon l'une des revendications précédentes, **caractérisé en ce que** le support de roue (28) peut tourner dans l'axe de rotation (32) orienté verticalement d'un angle maximal (44) entre 180° et 400°, plus particulièrement entre 210° et 360°, de préférence entre 250° et 290°.

13. Véhicule selon l'une des revendications précédentes, **caractérisé en ce que** le dispositif de levage (2) comprend un mât de levage (20) qui est logé dans l'espace libre (6) du véhicule (1), dans lequel le mât de levage (20) est logé dans l'espace libre (6) de manière coulissante dans la direction transversale (9) du véhicule.

14. Véhicule selon l'une des revendications précédentes, **caractérisé en ce qu'**au moins deux des roues (16) présentent un diamètre entre 10 pouces et 50 pouces (25,4 cm et 127 cm), plus particulièrement entre 12 pouces et 50 pouces (30,5 cm et 127 cm), de préférence entre 14 pouces et 50 pouces (35,6 cm et 127 cm).

15. Véhicule selon l'une des revendications 1 à 14, **caractérisé en ce que** toutes les roues (16) présentent un diamètre entre 10 pouces et 50 pouces (25,4 cm et 127 cm), plus particulièrement entre 12 pouces et 50 pouces (30,5 cm et 127 cm), de préférence entre 14 pouces et 50 pouces (35,6 cm et 127 cm).

16. Véhicule selon l'une des revendications précédentes, **caractérisé en ce qu'**un plan d'appui (13) est réalisé, sur lequel des objets allongés pris en charge par le dispositif de levage (2) peuvent être posés, dans lequel le plan d'appui (13) est disposé au-dessus des roues (16).
